# EUROPEAN PATENT APPLICATION

(11) **EP 1 265 428 A2**
(43) Date of publication of application: **11.12.2002**
(21) Application number: 02012443.4
(22) Date of filing: 10.06.2002
(51) Int. Cl.: H04M 19/00

(54) **Method of processing an outgoing call and transmitting digit code in a telephone**

(30) Priority: 09.06.2001 KR 2001032239
(71) Applicant: SAMSUNG ELECTRONICS CO., LTD., Suwon-City, Kyungki-do (KR)
(72) Inventor: Heo, Yun-Do, Paldal-gu, Suwon-city, Kyungki-do (KR); Hyon, Seung-Taek, Paldal-gu, Suwon-city, Kyungki-do (KR)
(74) Representative: Grünecker, Kinkeldey, Stockmair & Schwanhäusser Anwaltssozietät

(57) **Abstract**

A call origination method and a DTMF signal transmission method. According to the present invention, a phone having a phone book function can originate a call even if a selected phone number includes characters, and a phone having a DTMF transmission code storing function can transmit a corresponding DTMF signal even if a selected DTMF transmission code has characters. For this purpose, the characters of the selected phone number and the selected DTMF code are converted to digits assigned to keys having the characters.

## Description

### PRIORITY

This application claims priority to an application entitled "Method of Processing Outgoing Call and Transmitting Digit Code in Telephone" filed in the Korean Industrial Property Office on June 9, 2001 and assigned Serial No. 2001-32239, the contents of which are hereby incorporated by reference.

### BACKGROUND OF THE INVENTION

### 1. Field of the Invention

The present invention relates generally to a telephone having a phone book function for registering phone numbers and a DTMF (Dual Tone Multi-Frequency) transmission code storing function, and in particular, to a method of originating a call to a phone number registered in a phone book or transmitting a DTMF signal according to a DTMF transmission code.

### 2. Description of the Related Art

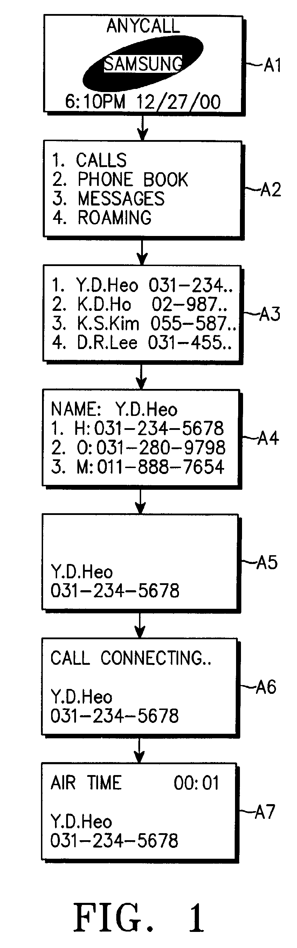

A phone with a phone book function, such as a mobile phone, can register a phone number in a phone book by digits and originate a call to a selected phone number. This will be described referring to FIG. 1. FIG. 1 illustrates display examples generated while originating a call to a phone number registered by digits in a phone book of a typical mobile phone for overseas use.

In FIG. 1, when a user enters a menu key in a standby state indicated by A1, menu items are displayed as indicated by A2. If the user enters digit "2", a phone number list A3 is displayed. Then, if the user enters digit '1", a name "Y. D. Heo" is displayed with his phone numbers in a display A4. Here, his home phone number, office phone number, and mobile phone number are numbered 1 through 3. If the user enters digit "1", his home phone number is displayed under the name of "Y. D. Heo" in a display A5. If the user enters a call origination key, for example, a display/speech key, a display A6 is provided while a call connection is being attempted. Upon call connection, a display A7 is provided.

Often, companies present their phone numbers, including collect call numbers, not by digits but by characters, partially or wholly, in advertisements on TV or through other media in the U. S. and other countries overseas. In the case where a user registers a phone number including characters in a phone book, only a notification message such as "invalid phone number" is displayed when a call connection to the phone number is attempted.

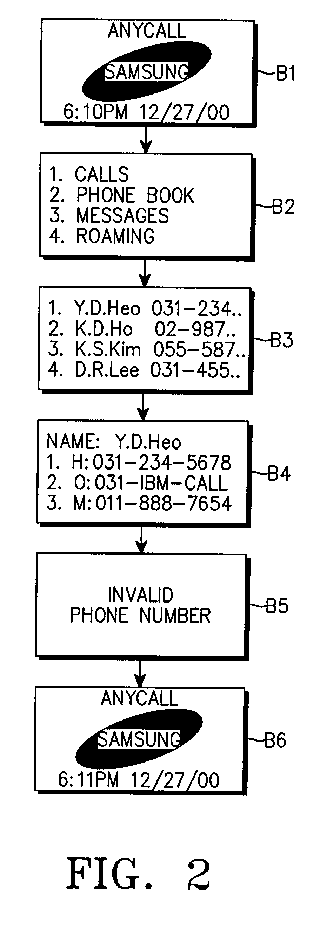

FIG. 2 illustrates display examples generated while originating a call to a phone number registered by characters in a phone book of the typical mobile phone for overseas use. The call connection failure in relation with a phone number with characters will now be described referring to FIG. 2.

In FIG. 2, displays B1, B2, and B3 are identical to A1, A2, and A3 as illustrated in FIG. 1. When a user enters digit "1" in the display B3, phone numbers including characters are displayed under the name of "Y. D. Heo" as indicated by B4, by way of example. If the user enters digit "2" in this state, a message "invalid phone number" is displayed, notifying a call connection failure as indicated by B5 and a standby display B6 is provided.

As mentioned above, it is impossible to call a phone number registered by characters in a phone book of a mobile phone. Therefore, the user must dial the phone number after he translates the characters to digits one by one.

On the other hand, a phone number having a DTMF transmission code storing function can transmit a DTMF signal corresponding to a pre-registered code during a call. For example, this is utilized when an ARS (Audio Response System) issues an ARS message requesting entry of a phone number in a digit code, or a called party wants to check the identification of a caller by digits. In the case where a plurality of numbers must be input in stages, a pause function is used to transmit the numbers automatically and separately. The pause function is largely divided into a hard pause using a DTMF transmission code including a character "#" and a time pause using a DTMF transmission code including a character "*". By the hard pause, a DTMF signal following "#" is transmitted every time a user enters the speech key during a call. With the time pause, the DTMF signal after "*" is transmitted after a predetermined time, for example, 2 seconds during a call.

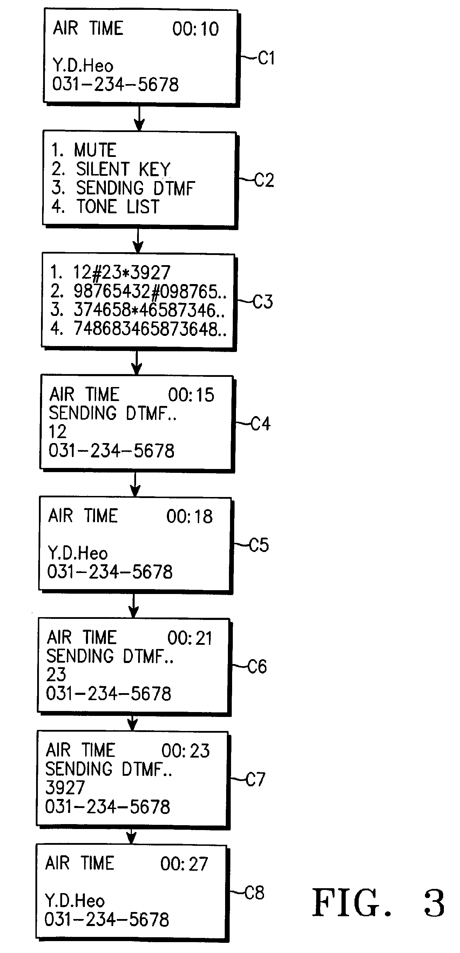

Transmission of a DTMF signal registered by digits with a time pause during a call in the mobile phone will be described referring to FIG. 3 showing display examples. In FIG. 3, when the user enters a menu key during a call with a display C1 displayed, menu items C2 are displayed. Upon input of digit "4", a tone list C3 is displayed. Upon input of digit "1" in this state, a DTMF signal corresponding to a digit code "12" before "#" in the code "12p23t3927" is transmitted to a called party and then a display C4 is provided. After the DTMF signal is completely transmitted, the display indicating the call in progress returns as indicated by C5. When the user enters the speech key again, a DTMF signal corresponding the digit code "23" between "#" and "*" is transmitted to the called and a display C6 is provided. Two seconds later, a DTMF signal corresponding to the digit code "3927" after "*" is transmitted to the called party and a display C7 is provided. After transmission of the DTMF signal, a display C8 is provide to indicate the call in progress.

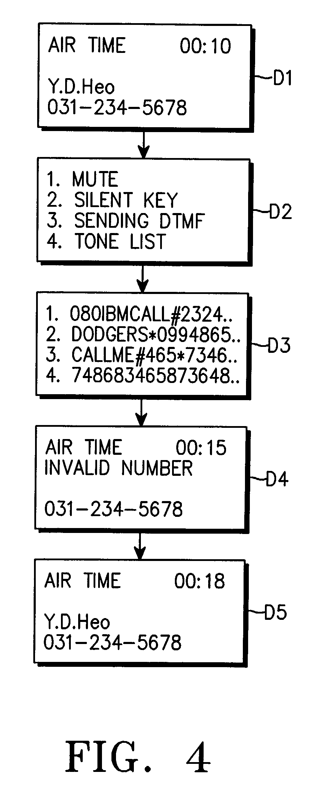

However, while a DTMF transmission code can be registered partially or wholly by characters, it is impossible to transmit the DTMF code registered by characters. Transmission of a DTMF signal registered by characters through pauses during a call in the mobile phone for overseas use will be described referring to FIG. 4.

In FIG. 4, displays D1 and D2 are identical to C1 and C2 as illustrated in FIG. 3. If the user enters digit "4" in the display D2, a DTMF code including "IBM CALL" is displayed as indicated by D3. Upon input of digit "1" in this state, a message "invalid number" is displayed, notifying a failed DTMF signal transmission as indicated by D4 and a display D5 returns to indicate the call in progress.

As described above, while it is possible to transmit a DTMF signal corresponding to a digit code in a phone with a DTMF signal transmission code storing function, it cannot transmit a DTMF signal corresponding to a code including characters. Therefore, the user must translate characters to digits one by one in order to transmit a DTMF signal corresponding to a code including the characters.

### SUMMARY OF THE INVENTION

It is, therefore, an object of the present invention to provide an outgoing call processing method in which a call can be originated to a phone number registered partially or wholly by characters in a phone number field of a phone book.

It is another object of the present invention to provide a digit code transmitting method in which a digit code can be transmitted even when a DTMF transmission code includes characters aside from digits.

The foregoing and other objects of the present invention are achieved by a call origination method and a DTMF code transmission method.

According to the call origination method, a phone number selected from a phone book is checked to determine whether it includes characters. If it does, the characters are converted to digits assigned to keys having the characters and a call is originated to the phone number with the characters converted to the digits.

According to the DTMF signal transmission method, a DTMF code selected in a DTMF code search mode during a call is checked to determine whether it includes characters. If it does, the characters are converted to digits assigned to keys having the characters and a DTMF signal corresponding to the DTMF code with the characters converted to the digits is transmitted.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates examples of displays generated while originating a call to a phone number registered by digits in the phone book of a typical mobile phone for domestic use;
FIG. 2 illustrates examples of displays generated while originating a call to a phone number registered by English alphabets in the phone book of the typical mobile phone for domestic use;
FIG. 3 illustrates examples of displays generated while transmitting a DTMF signal registered by digits with pauses in the typical mobile phone for domestic use;
FIG. 4 illustrates examples of displays generated while transmitting a DTMF signal registered by characters with pauses in the typical mobile phone for domestic use;
FIG. 5 is a block diagram of a mobile phone to which the present invention is applied;
FIG. 6 is a flowchart illustrating an outgoing call processing operation according to an embodiment of the present invention;
FIG. 7 illustrates examples of displays generated while originating a call to a phone number registered using letters in the English alphabet in the phone book of a mobile phone for domestic use according to the embodiment of the present invention;
FIG. 8 illustrates examples of displays generated while originating a call to a phone number registered using symbols in the Korean alphabet in the phone book of a mobile phone for overseas use according to the embodiment of the present invention;
FIG. 9 is a flowchart illustrating a digit code transmitting operation according to the embodiment of the present invention;
FIG. 10 illustrates examples of displays generated while transmitting a DTMF signal registered using letters in the English alphabet according to the embodiment of the present invention; and
FIG. 11 illustrates examples of displays generated while transmitting a DTMF signal registered using Korean symbols and letters in the English alphabet in the mobile phone for domestic use according to the embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

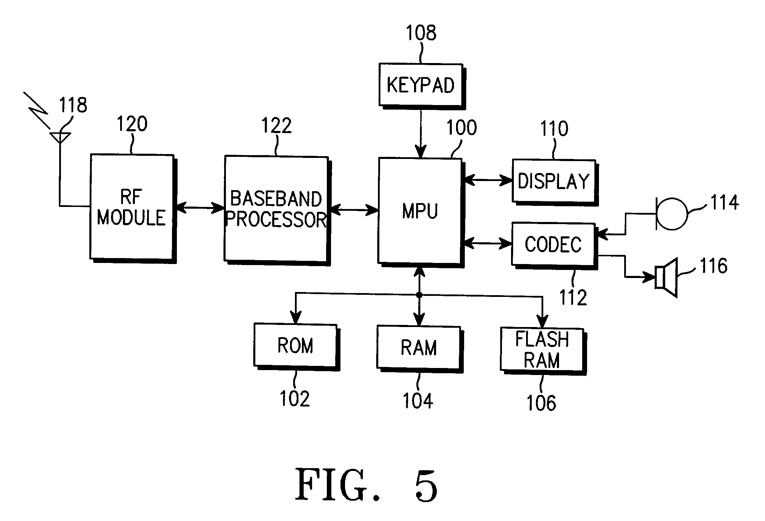

FIG. 5 is a block diagram of a typical mobile phone having a phone book function and a DTMF transmission code storing function, to which the present invention is applied. Referring to FIG. 5, an MPU (Micro-Processor Unit) 100 is a control block for phone calls, data communication, and Internet access. In addition to normal operations, the MPU 100 processes an outgoing call and transmits a DTMF code according to the present invention. A ROM (Read Only Memory) 102 stores the micro-codes of operation and control programs and reference data for the MPU 100. According to the present invention, the ROM 102 also stores program data needed to convert characters included in phone numbers or DTMF transmission codes, and program data needed to control the operation of the mobile phone. A RAM (Random Access Memory) 104 functions as a working memory for the MPU 100. A flash RAM 106 provides an area for storing updateable data to be kept and builds a phone book database and a DTMF database. A keypad 108 includes a plurality of digit keys 0 to 9 and function keys such as menu, speech, erase, end, *, #, and volume, and feeds key input data corresponding to a key pressed by a user. A display 110 displays image information under the control of the MPU 100. A CODEC 112 connected to the MPU 100 forms a voice input/output block with a microphone 114 and a speaker 116 connected to the CODEC 112. An RF (Radio Frequency) module 120 exchanges radio signals with a base station through an antenna 118. The RF module 120 modulates a transmission signal received from the MPU 100 through a baseband processor 122 and transmits the modulated RF signal through the antenna 118. The RF module 120 also demodulates an RF signal received via the antenna 118 and feeds the demodulated signal to the MPU 100 via the baseband processor 122. The baseband processor 122 processes baseband signals exchanged between the RF module 120 and the MPU 100.

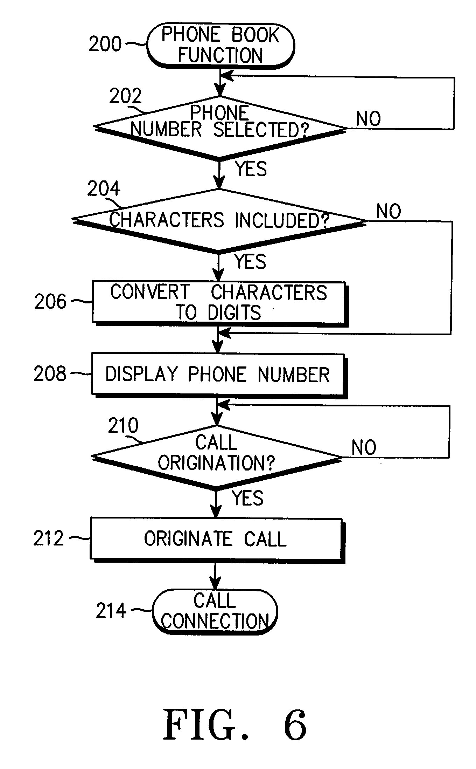

FIG. 6 is a flowchart illustrating call origination in the MPU 100 according to an embodiment of the present invention. Referring to FIG. 6, when a phone number list is displayed in step 200 and a user selects a phone number in step 202, the MPU 100 determines whether the selected phone number includes characters in step 204. If it does, the MPU 100 converts the characters to digits marked on keys corresponding to the characters in step 206 and displays the resulting phone number with all digits on the display 110 in step 208.

Conversion of characters to digits is based on Table 1 below. Table 1 lists digits versus characters on the same keys. Since there are no letters from the English alphabet for digit 1 in a mobile phone for domestic use, the character area for digit 1 is blank. When using the Korean alphabet, Table 1 relies on a so-called "Cheon-Ji-In" input scheme. For example, "1-800-PAY-CARD" is converted to "1-800-729-2273" in the mobile phone for overseas use, whereas "080- 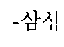 " and "080-SAMSUNG" are converted respectively to "080-8120-8210" and "080-726-7864" in a mobile phone for overseas use.

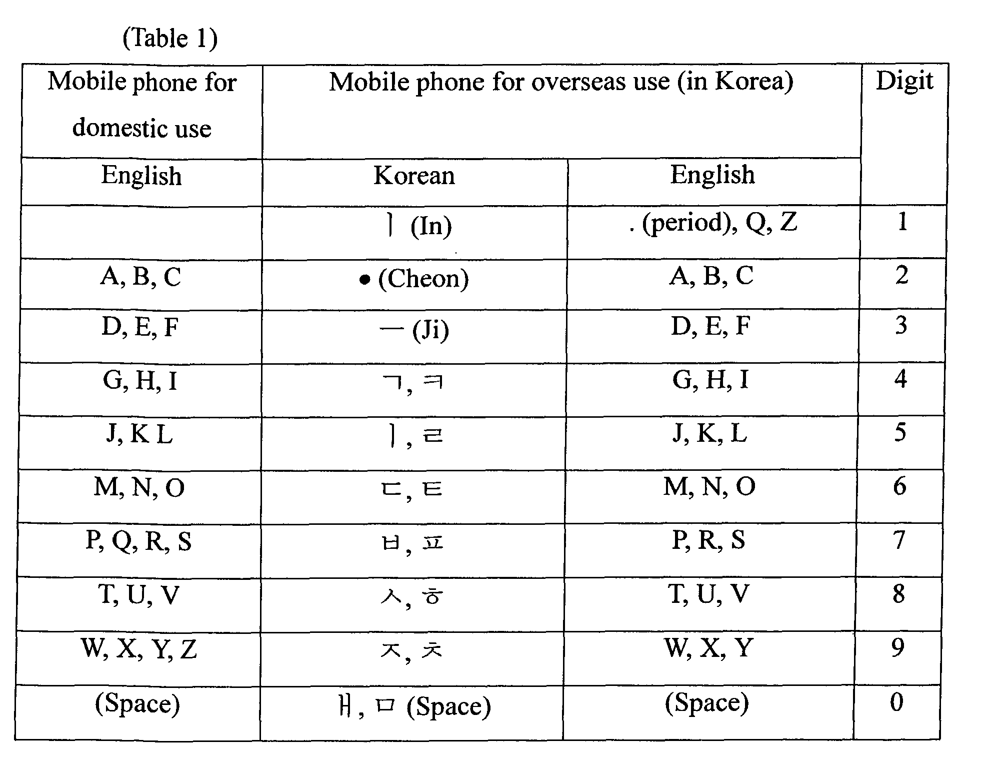

On the other hand, if the selected phone number includes no characters, the MPU 100 displays the selected phone number on the display 110 in step 208. Upon input of a call origination key in step 210, the displayed phone number is dialed in step 212 and a call is connected in step 214.

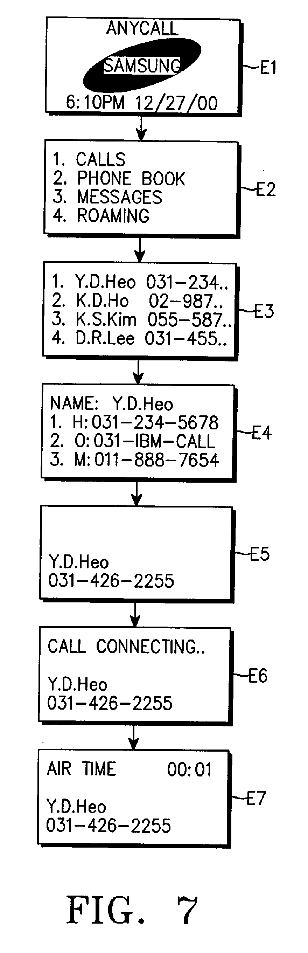

Call origination to a phone number including letters in the English alphabet registered in a phone book in a mobile phone for domestic use according to the embodiment of the present invention will be described referring to display examples illustrated in FIG. 7. In FIG. 7, displays E1 to E4 are identical to B 1 to B4 as illustrated in FIG. 2. When a user enters digit "2" in the display E4, "IBM-CALL" is converted to "426-2255" as shown in a display E5 in the present invention, while a message "invalid phone number" is displayed as indicated by B5 of FIG. 2. Upon input of the call origination key, a display E6 is provided while a call connection is attempted. When a call is connected, a display E7 is provided.

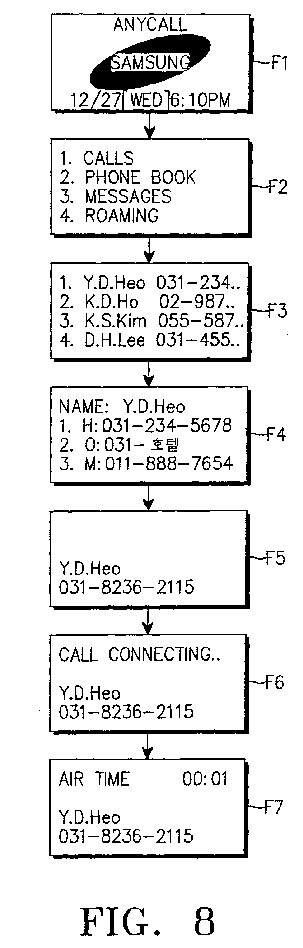

Call origination to a phone number including symbols in the Korean alphabet registered in a phone book in a mobile phone for overseas use according to the embodiment of the present invention will be described referring to display examples in FIG. 8. In FIG. 8, displays F1 to F7 are made in the same manner as E1 to E7 as illustrated in FIG. 7. As shown in a display F5, " 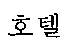 " in F4 is converted to "8236-2115". Upon input of the call origination key, a display F6 is provided while a call connection is attempted. When a call is connected, a display F7 is provided.

Therefore, a user can register a phone number or a collect call number presented in an advertisement on TV or via other media in a phone book without any conversion of characters to digits even if it includes characters, and dial the phone number directly. As a result, a user has only to register phone numbers by characters without the need of memorizing all-digit phone numbers and dial them via a phone book function.

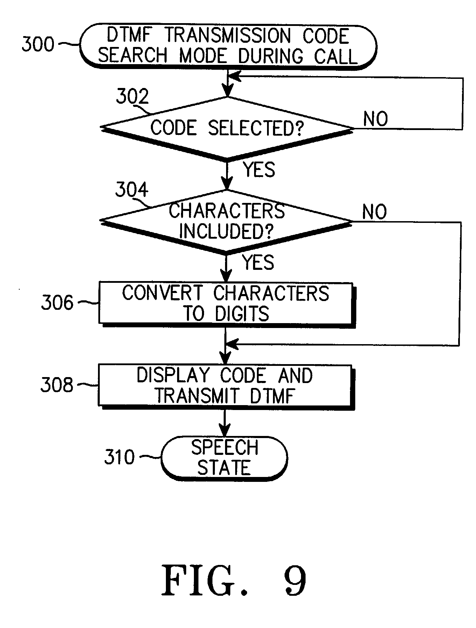

Now a description of digit code transmission in the MPU according to the embodiment of the present invention will be described referring to FIG. 9. In FIG. 9, when a DTMF transmission code search mode is set during a call in step 300 and the user selects a DTMF code in step 302, the MPU 100 checks whether the selected DTMF code includes characters in step 304. If it does, the MPU 100 converts the characters to corresponding digits, referring to Table 1, in step 306 and displays the converted digit code on the display 110, while transmitting a corresponding DTMF signal to the other party in step 308. In step 310, the MPU 100 returns to a speech state.

Meanwhile, in the case of a tone list registered by characters, "#" and "*" can be used to discriminate a hard pause from a time pause as shown in FIGs. 3 and 4. In this case, characters "#" and "*" are used to avoid confusion.

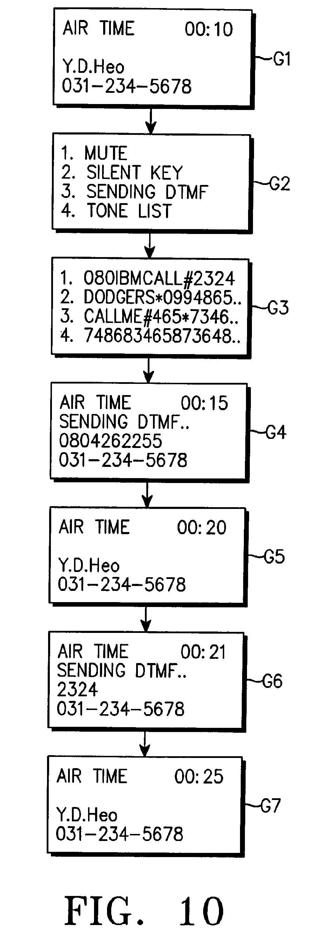

Transmission of a DTMF signal corresponding to a digit code registered using letters in the English alphabet according to the embodiment of the present invention will be described referring to display examples of FIG. 10. In FIG. 10, displays G1 to G3 are identical to D1 to D3 as illustrated in FIG. 4. When a user enters digit "1" in the display G3, "IBM-CALL" is converted to "426-2255" and a digit code "0804262255" before "#" is displayed, while a corresponding DTMF signal is transmitted, as shown in a display G4 in the present invention. Without the present invention, a message "invalid phone number" is displayed as indicated by D4 of FIG. 4. Upon input of the call origination key, a display E6 is provided while a call connection is attempted. When a call is connected, a display E7 is provided. Then, a speech state is returned as shown in a display G5. When the user presses the speech key again, a digit code "2324" after "#" is displayed as indicated by G6, while a corresponding DTMF signal is transmitted to the other party. In a display G7, the speech state is returned.

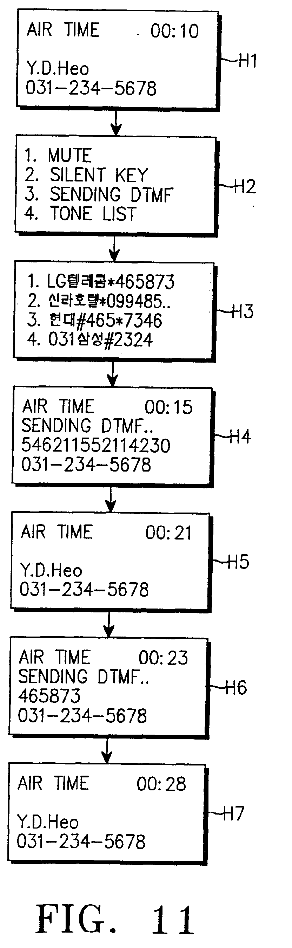

Transmission of a DTMF signal corresponding to a digit code registered using Korean symbols and letters in the English alphabet according to the embodiment of the present invention will be described referring to display examples of FIG. 11. In FIG. 11, displays H1 to H7 are performed in the same manner as G1 to G7 as illustrated in FIG. 10. When a user enters digit "1" in the display H3, "LG 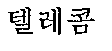 " is converted to "546211552114230", while a corresponding DTMF signal is transmitted, as shown in a display H4. Since "*" follows "LG 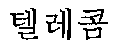 ", the speech state is returned as shown in H5 and two seconds later, a digit code "465873" after "*" is displayed as indicated by H6, while a corresponding DTMF signal is transmitted to the other party. Then, a speech state is returned as shown in a display H7.

Accordingly, even when a DTMF transmission code is input in characters, a DTMF signal corresponding to the DTMF transmission code can be transmitted during a call. Therefore, a user has only to store a DTMF code by characters without the need of memorizing it by digits to transmit a DTMF signal corresponding to the digit code using a DTMF transmission code storing function.

As described above, the present invention enables call origination even if a phone number selected from a phone book includes characters. Also, even when a DTMF transmission code includes characters, a corresponding DTMF signal can be transmitted during a call.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for call origination to a phone number selected from a phone book in a telephone having a phone book function by which a phone number including characters can be registered, comprising the steps of:
checking whether the phone number selected from the phone book includes characters;
converting characters to digits assigned to keys having the characters if the selected phone number includes the characters;
originating a call to the phone number with the characters converted to the digits; and
originating a call to the selected phone number if the phone number has no characters.

2. The method of claim 1, wherein each call origination step comprises the steps of:
displaying the selected phone number; and
originating a call to the phone number when a call origination key is pressed while the phone number is displayed, and connecting a call.

3. A method of transmitting a DTMF signal corresponding to a DTMF code in a DTMF transmission code search mode during a call in a telephone having a function of storing a DTMF transmission code including characters, comprising the steps of:
checking whether the selected DTMF code includes characters;
converting characters to digits assigned to keys having the characters if the selected DTMF code includes the characters;
transmitting a DTMF signal corresponding to the DTMF code with the characters converted to the digits; and
transmitting a DTMF signal corresponding to the DTMF code if the selected DTMF code has no characters.

4. The method of claim 3, wherein each transmission step comprises the step of displaying the selected DTMF code.

5. The method of claim 3, further comprising the step of returning to a speech state after the DTMF signal transmission.
